(19) Europäisches Patentamt / European Patent Office / Office européen des brevets

(11) **EP 4 389 810 A1**

(12) **EUROPEAN PATENT APPLICATION**

(43) Date of publication:
**26.06.2024 Bulletin 2024/26**

(21) Application number: **22216447.7**

(22) Date of filing: **23.12.2022**

(51) International Patent Classification (IPC):
**C08K 5/00** (2006.01)   **C08L 23/12** (2006.01)
**C08F 110/06** (2006.01)

(52) Cooperative Patent Classification (CPC):
(C-Sets available)
**C08L 23/12; C08F 110/06; C08K 5/005;
C08K 5/0083;** C08L 2205/24; C08L 2207/20;
C08L 2314/02                                    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Lummus Novolen Technology GmbH
68165 Mannheim (DE)**

(72) Inventors:
• **RÄNTZSCH, Volker Andreas
  Mannheim (DE)**
• **JÖRRES, Volker Heinrich
  Mannheim (DE)**

(74) Representative: **Osha BWB
2, rue de la Paix
75002 Paris (FR)**

(54) **POLYMER BLENDS COMPRISING RECYCLED POLYMERS WITH ENHANCED PROPERTIES**

(57)    The present disclosure relates to a polymer blend comprising a composition comprising one or more polypropylene-based polymers and one or more additives and having selected properties, and at least one recycled polymer. Moreover, the present disclosure relates to a method of preparing the polymer blend, to a composition as defined above, to uses of the composition in a polymer blend, and to an article comprising the composition or the polymer blend.

FIG. 3

EP 4 389 810 A1

(52) Cooperative Patent Classification (CPC): (Cont.)

C-Sets
**C08K 5/005, C08L 23/12;
C08K 5/0083, C08L 23/12;
C08L 23/12, C08L 23/12, C08K 5/005,
C08K 5/0083**

**Description**

**Technical field**

The present disclosure relates to a composition comprising one or more polypropylene-based polymers and one or more additives, as well as to a polymer blend comprising the composition and at least one recycled polymer. Moreover, the present disclosure relates to a method of preparing the polymer blend and to uses of the composition. The present disclosure also provides an article comprising the composition or the polymer blend.

**Background art**

Virgin polypropylene polymers may be produced using petrochemical technologies such as slurry or gas phase processes (See *e.g.,* Pasquini, N., Polypropylene Handbook, 2nd Ed., 2005.). For the production of polypropylene homopolymers and random copolymers of propylene with other alpha-olefins, a plant set-up of at least one polymerization reactor is required. Polypropylene homopolymers may have high stiffness (*e.g.,* a high flexural modulus), but generally lack impact resistance at room temperature and lower temperatures. Random copolymers, on the other hand, may provide higher impact resistance at room temperature, but generally lack high stiffness. Impact copolymers, also known as heterophasic copolymers, provide a combination of both, high stiffness and high impact resistance, as they contain fractions of polypropylene homopolymer and ethylene-propylene-copolymer. However, for the production of impact copolymers, a minimum of two polymerization reactors in a cascade set-up is required. Thus, manufacturing impact copolymers is inherently more demanding, because it is more complex than manufacturing homopolymers or random copolymers.

For the production of virgin polypropylene polymers, different catalysts may be used, including catalysts of Ziegler-Natta or metallocene type. For Ziegler-Natta catalysts, different internal donors were developed over the past decades, such as phthalate-, diether-, succinate-, or diester-based donors (See, *e.g.,* Paulik et al. Macromol. Chem. Phys. 2021, 222, 2100302.). Internal donors have a strong influence on the characteristics of produced polymers as they determine the achievable degree of isotacticity, the chemical composition distribution, the molecular weight distribution, and the incorporation of co-monomers.

For all virgin polypropylene polymers, natural resources in the form of propylene gas and potential other alpha-olefins are used. During the production of virgin polypropylene polymers, large amounts of energy are needed for melting the polymer in the plant extruder, for heating, for the compression of gases, for agitation, and for transporting the final products from the petrochemical plants to distributers and converters. Thus, the production of virgin polypropylene polymers requires a high use of natural resources and creates a certain carbon footprint (*e.g.,* 1.72 kg $CO_2$-eq./ kg Material. Source: Average of Table 4 of Alsabri et al. Polymers 2021, 13, 3793.).

Compositions of virgin polypropylene polymers may be completely or partially replaced by recycled polymer compositions from, *e.g.,* post-consumer waste, in some applications. However, in terms of physical properties, recycled polymer compositions show inferior material properties compared to virgin polymer compositions as they contain a mixture of different polymers that lead to an averaged property profile instead of distinguished properties for different applications, such as injection molding, film processing, or fiber and textile applications. Therefore, recycled polymer compositions are almost exclusively used for low demanding injection molding applications such as furniture, flower pots, or non-food contact packaging.

Several concepts to improve the properties of recycled polymer compositions are known in the art, *e.g.,* the use of fillers (see WO 2022/084236 A1 and WO 2014/167493 A1), compatibilizers (see EP 3715410 A1 and WO 2022/104275 A1), and the addition of different types of virgin polymers (see WO 2022/084236 A1, EP 3715410 A1, EP 3916047 A1, WO 2021/032460 A1, WO 2014/167493 A1, WO 2021/165751 A1, US 2022/0145057 A1, WO 2022/104275 A1, WO 2022/123000 A1, WO 2022/123002 A1 and EP 3802689 B1). In case of the latter, blends of virgin and recycled polymer compositions have been shown to be a trade-off between favorable physical properties and the reduction of carbon footprint (see WO 2022/084236 A1 and WO 2021/165751 A1). State-of-the-art virgin polymer compositions frequently used for upgrading recycled polymer compositions are typically commercial polymer products that were intended to be used without the addition of recycled polymer compositions for compounding, injection molding, film, or fiber applications (See, *e.g.,* the examples of US 2022/0145057 A1, WO 2022/104275 A1, WO 2022/123000 A1 and WO 2022/123002 A1). Therefore, the achievable physical properties of blends between recycled and state-of-the-art virgin polymer compositions are a superposition between the two, and one would not achieve the desired property profile of fully virgin polymer compositions. To solve this problem, several applicants have disclosed compositions comprising, e.g., multiple olefin (co-) polymers and/or polyethylene, where the polymers need to be prepared using laborious polymerization technologies and complicated plant set-ups, i.e., need a high manufacturing complexity.

A different approach to solve the problem of improving the properties of blends between recycled and virgin polymer compositions was found in the use of special internal donors for the polymerization of virgin polymers that are intended to be blended with recycled polymer compositions. Here, it was found that especially non-phthalic acid esters selected from optionally substituted malonates, maleates, succinates, glutarates, cyclohexene- 1,2-dicarboxylates, benzoates and derivatives and/or mixtures thereof where especially suitable (see EP 3916047 A1 and WO 2021/032460 A1). The preferred type of internal donor was reported to be based on citraconates, *e.g.,* bis(2-ethylhexyl) citraconate.

Overall, there is an unmet need for dedicated polymer compositions that can enhance properties of recycled polymers or recycled polymer compositions to virgin-like performance at low addition levels, which would be beneficial for the reduction of carbon footprint and a more efficient use of natural resources. Furthermore, the polymers for these compositions should be obtainable by a simple polymerization process, *i.e.,* have a low manufacturing complexity.

**Summary**

One of the objects of the present disclosure is to provide a composition which, once blended with at least one recycled polymer, upgrades the at least one recycled polymer without requiring manufacturing complexity, while maintaining a reduced carbon footprint. For example, the at least one recycled polymer may comprise one or more post-consumer waste polymers or a post-consumer waste polymer composition.

In the present description and the following claims, upgrading is intended to include, for example, an improvement of mechanical, physical, and/or chemical properties of the at least one recycled polymer.

It has now been found that the above-mentioned object is attained by a composition as defined by claim 1.

In one aspect thereof, the present disclosure relates to a composition comprising:

one or more polypropylene-based polymers; and
one or more additives selected from the group comprising, for example consisting of, antioxidants, acid scavengers, antistatic agents, nucleating agents, clarifiers, slip agents, and antiblocking agents,
wherein the composition satisfies I >4.0,
wherein I is defined by the following equation (1):

$$I = \frac{T_3 + T_c - 225°C}{PI\ ratio \times \frac{XS}{wt\%} \times °C} \qquad (1)$$

wherein

$T_3$ is the peak maximum temperature in °C as determined by analytical temperature rising elution fractionation method;
$T_c$ is the peak crystallization temperature in °C as determined in accordance with ISO 11357-3;
XS is the xylene cold soluble content of the composition in wt%; and
the PI ratio is defined by the following equation (2):

$$PI\ ratio = \frac{PI}{-0.679 \times \log\left(\frac{MFR}{g/10min}\right) + 3.9} \qquad (2)$$

wherein

PI is the rheological polydispersity index as determined by rheological oscillatory frequency sweep; and
MFR is the melt mass-flow rate in g/10min as determined in accordance with ISO 1133 at 230°C and a load of 2.16 kg.

Surprisingly, it was found that the composition according to the present disclosure, when blended with at least one recycled polymer, even when the resulting polymer blend comprises a large fraction of one or more recycled polymers, such as, for example, at least 40%wt or above, up to 85wt%, 90wt% or more of the total weight of the polymer blend, gives rise to a polymer blend exhibiting the same or better material properties (*e.g.*, stiffness) than state-of-the-art polymer blends while at the same time having a significantly lower carbon footprint, using natural resources more efficiently. Additionally, the composition of the present disclosure is easy to manufacture.

The composition according to the present disclosure can be used to replace virgin polymer compositions, such as, for example, heterophasic (impact) copolymer compositions which combine high stiffness with high impact resistance at room temperature, but have a higher carbon footprint, use natural resources less efficiently, and require a complex manufacturing method or plant.

In the present description and the following claims, the terms "virgin polymer" or "virgin material" refer to a polymer or a material, respectively, that is newly produced prior to its first use, and that has not already been recycled. For instance, the one or more polypropylene-based polymers of the composition and polymer blend according to embodiments of the present disclosure include or are made of one or more virgin polymers.

In the present description and the following claims, the terms "polypropylene-based polymer" is used to designate any polymer or polymer composition or polymer blend comprising polypropylene. The polypropylene may comprise polypropylene homopolymers and/or polypropylene copolymers. According to one or more embodiments, the polypropylene-based polymer comprises at least 50wt%, 60wt%, 70wt%, 80wt%, 90wt%, 95wt%, or 99wt% of homopolymer. According to one or more embodiments, the polypropylene-based polymer is a homopolymer.

In the present description and the following claims, the term "$T_3$" is the peak maximum temperature in °C as determined by analytical temperature rising elution fractionation (ATREF). ATREF is performed using an automated CRYSTAF-TREF instrument (PolymerChar S.A., Spain), equipped with a heated infrared (IR) concentration detector with composition sensor, and a capillary viscometer detector. Polymer solutions are prepared at a concentration of 3 $\pm$0.25 mg/ml in 1,2-dichlorobenzene (stabilized with 500 ppm 2,6-di-tert-butyl-4-methylphenol) at 150° C for 90 minutes. After dissolution is completed, the sample is transferred to the ATREF column where stabilization, crystallization, and elution cycles are performed as follows. During stabilization, the column is cooled down from 150°C to 95°C. at -40°C/min and then kept at 95°C for 45 min. The crystallization is carried out by cooling down from 95°C to 35° C at a cooling rate of -0.5°C/min. At the end of the crystallization, the column is kept at 35°C for 10 minutes. Subsequently, the content of the column is eluted for 10 minutes to collect the soluble fraction. The elution is carried out by heating from 35°C to 140°C at a heating rate of +1°C/min, while maintaining a constant solvent flow rate of 0.5 ml/min. The obtained ATREF curve is normalized to 100% integral including the soluble fraction. The peak maximum temperature $T_3$ is assigned to the observed maximum in the temperature range from 100°C to 150°C.

In the present description and the following claims, the term "$T_c$" is the peak crystallization temperature in °C. Peak melting temperatures $T_M$ (equivalent to $T_{pm}$) and peak crystallization temperatures $T_C$ (equivalent to $T_{pc}$) are determined according to ISO 11357-3. The heating and cooling protocol is as follows: [1] 50 to 200°C at +10 K/min, [2] 200°C for 5 min, [3] 200 to 50°C, at -10 K/min, [4] 50°C for 5 min, [5] 50 to 200°C at +10 K/min. For the peak melting temperature $T_M$, the second heating cycle (step [5]) is evaluated. For the peak crystallization temperature $T_c$, the cooling cycle (step [3]) is evaluated.

In the present description and the following claims, the term "XS" is the xylene cold soluble content in wt%. XS is determined based on ISO 16152 with a modified temperature profile as follows. For the analysis, 5 grams of sample are added to a 1000 ml round bottom flask and combined with 450 ml of ortho-xylene. The sample / xylene mixture is heated to 140$\pm$2°C under reflux and kept at this temperature for 60 min until a clear solution is obtained. The flask is cooled down to 130°C until refluxing stops. Subsequently, the mixture is agitated and cooled using an ice bath for a minimum of 20 min until 5°C is reached and a gel is precipitated. The ice bath is then removed and replaced with a water bath maintained at 23°C. The flask remains in the water bath under constant agitation for 30 minutes and is slowly re-heated to room temperature. The mixture is then poured through a filter and the solvent is collected. The precipitated gel is washed with an additional 50 ml of clean xylene. An aliquot of 200 ml of the filtrate is taken and poured into a 250 ml round-bottom flask. The solvent is removed by evaporation until constant weight is obtained.

Calculation of the xylene cold soluble content (XS):

$$XS[wt\%] = \frac{(m_{XS} - m_{RBF}) \times \dfrac{V_{XYL}}{V_{SAMPLE}}}{m_P} \times 100wt\%$$

$$V_{XYL} = \frac{m_{XYL}}{\rho_{XYL}}$$

where $m_p$: mass (g) of sample, $m_{XYL}$: mass (g) of total xylene used, $\rho_{XYL}$: density (g/ml) of xylene used, $m_{RBF}$: mass (g) of 250 ml empty round bottom flask, mxs: mass (g) of 250 ml round bottom flask with residue, $V_{XYL}$: volume (ml) of total xylene used, $V_{SAMPLE}$: volume (ml) of aliquot in 250 ml round bottom flask.

In the present description and the following claims, the term "PI" is the rheological polydispersity index determined as follows. Rheological oscillatory frequency sweep experiments are performed on compression-molded disks using a parallel-plate geometry at 210°C, oscillatory strain amplitude $\gamma_0$ = 10%, angular frequency $\omega$ = 389 to 0.1 rad/s, and a DHR-2 rheometer (TA Instruments, New Castle, USA). The storage modulus G' and loss modulus G" data is analyzed by performing a least squares polynomial fit: nn(G') = $a_2 \times$[ln(G")]$^2$ + $a_1 \times$ln(G") + $a_0$. The cross-over modulus Gc is calculated from the fit parameters by:

$$G_C = \exp\left[\frac{1 - a_1 + \sqrt{(a_1 - 1)^2 - 4a_2 a_0}}{2a_2}\right]$$

The rheological polydispersity index (PI) is calculated from the calculated cross-over modulus Gc:

$$PI = \frac{10^5 \text{Pa}}{G_c}$$

In the present description and the following claims, the term "MFR" is the melt mass-flow rate as determined in accordance with ISO 1133 at 230°C and a load of 2.16 kg.

Further embodiments of the composition are defined in the dependent claims.

In a further aspect thereof, the present disclosure is directed to a composition comprising one or more polypropylene-based polymers, and one or more additives selected from the group comprising, for example consisting of, antioxidants, acid scavengers, antistatic agents, nucleating agents, clarifiers, slip agents, and antiblocking agents, wherein the one or more polypropylene-based polymers include a homopolymer produced using a MgCl$_2$-xROH-supported Ziegler-Natta catalyst with a ratio between an internal donor and magnesium (ID/Mg) of at least 0.14. For example, ID/Mg may be from 0.14 to 0.40. According to one or more embodiments, the one or more polypropylene-based polymers are produced using also an external donor. The internal donor, the external donor and the one or more additives may be according to any one of the embodiments herein disclosed. According to one or more embodiments, the internal donor, the external donor and the one or more additives are selected such that the composition satisfies I>4.

In addition, in a further aspect thereof, the present invention relates to a polymer blend comprising the composition according to any one of the embodiments herein disclosed, and at least one recycled polymer. The at least one recycled polymer may include a recycled polymer composition.

In a still further aspect thereof, the present disclosure relates to a method of preparing the polymer blend according to any one of the embodiments herein disclosed comprising mixing the composition and the at least one recycled polymer or polymer composition.

In addition, the present disclosure relates to the use of the composition according to any one of the embodiments herein disclosed in a polymer blend for upgrading one or more post-consumer waste polymers or industrial waste polymers included in the polymer blend.

Furthermore, the present disclosure relates to an article comprising the composition according to any one of the embodiments herein disclosed or the polymer blend according to any one of the embodiments herein disclosed. According to one or more embodiments, the article may be formed by injection molding or thermoforming.

The present disclosure is based on the finding that a selected composition may be blended with high contents of recycled material from, *e.g.,* post-consumer waste, in polymer blends having properties (*e.g.,* stiffness) at least comparable to the properties of fully virgin polymer compositions.

The compositions and polymer blends according to one or more embodiments of the present disclosure may have excellent mechanical properties, such as, for example, flexural modulus and/or Charpy (notched) impact strength. These compositions and polymer blends may thus contribute to a more efficient use of natural resources and may have a reduced carbon footprint which may be suitable for a wide range of applications, including injection molding, thermoforming, and fiber applications.

Embodiments of the composition and polymer blend may have a selected combination of features, such as molecular weight distribution, crystallizability, and stereoregularity, which can be used to prepare polymer blends having a high content of recycled material and low carbon footprint, while having properties (*e.g.,* stiffness) comparable to those of fully virgin polymer compositions.

**Brief description of the drawings**

Figure 1 shows the flexural modulus of examples of polymer blends in accordance with one or more embodiments, comparative examples of polymer blends and comparative virgin polymer compositions.

Figure 2 shows the carbon footprint of the examples and comparative examples that showed comparable flexural modulus and Charpy (notched) impact resistance at 23°C.

Figure 3 shows the stiffness improvement [%] of the examples and comparative examples in relation to the reduction of carbon footprint [%].

Figure 4 shows the stiffness improvement [%] of the examples and comparative examples according to WO 2021/032460 A1 in relation to the reduction of carbon footprint [%].

**Detailed description of embodiments**

In the following, embodiments of the polymer blend are provided. Unless indicated otherwise, embodiments of the composition may comprise features identical to the features of the composition comprised in any one of the embodiments of the polymer blend. In other words, all features of the composition indicated with reference to the composition of the polymer blend are applicable also to the composition used as such (and vice versa).

**Embodiments of the Polymer Blend**

Embodiments of the present disclosure are directed to a polymer blend comprising:

a composition comprising:

one or more polypropylene-based polymers; and

one or more additives selected from the group comprising, for example consisting of antioxidants, acid scavengers, antistatic agents, nucleating agents, clarifiers, slip agents, and antiblocking agents; and

at least one recycled polymer,
wherein the composition satisfies I >4.0,
wherein I is defined by the following equation (1):

$$I = \frac{T_3 + T_c - 225°C}{PI\ ratio \times \frac{XS}{wt\%} \times °C} \qquad (1)$$

wherein

$T_3$ is the peak maximum temperature in °C determined by analytical temperature rising elution fractionation method;
$T_c$ is the peak crystallization temperature in °C as determined in accordance with ISO 11357-3;
XS is the xylene cold soluble content of the composition in wt% as determined in accordance with ISO 16152 with the temperature profile described in paragraph [0019]; and
the PI ratio is defined by the following equation (2):

$$PI\ ratio = \frac{PI}{-0.679 \times \log\left(\frac{MFR}{g/10min}\right) + 3.9} \qquad (2)$$

wherein

PI is the rheological polydispersity index as determined by rheological oscillatory frequency sweep; and
MFR is the melt mass-flow rate in g/10min as determined in accordance with ISO 1133 at 230°C and a load of 2.16 kg.

According to one or more embodiments, $T_3$ in equation (1) may be of from 115.5°C to 140.0°C, preferably of from 116.0°C to 135.0°C, more preferably of from 116.5°C to 130.0°C, still more preferably of from 117.0°C to 125.0°C, still more preferably of from 117.2°C to 122.0°C, and most preferably of from 117.3°C to 120.0°C.

According to one or more embodiments, $T_c$ in equation (1) may be of from 115.0°C to 145.0°C, preferably of from 117.0°C to 140.0°C, more preferably of from 119.0°C to 139.0°C, still more preferably of from 120.0°C to 138.0°C, still more preferably of from 122.0°C to 137.0°C, still more preferably of from 125.0°C to 136.0°C, still more preferably of from 127.0°C to 135.0°C, and most preferably of from 129.0°C to 135.0°C.

According to one or more embodiments, XS in equation (1) may be ≤5.5wt%, preferably ≤5.0wt%, more preferably ≤4.5wt%, still more preferably ≤4.0wt%, still more preferably ≤3.5wt%, still more preferably ≤3.0wt%, still more preferably ≤2.5wt%, and most preferably ≤2.4wt%.

According to one or more embodiments, the PI ratio in equations (1) and (2) is of from 0.90 to 1.23, preferably of from 0.91 to 1.20, more preferably of from 0.92 to 1.18, still more preferably of from 0.93 to 1.16, still more preferably of from 0.94 to 1.14, and most preferably of from 0.95 to 1.13.

According to one or more embodiments, the MFR (230°C, 2.16 kg, ISO 1133) in equation (2) may be of from 0.1 to 200 g/10 min, preferably of from 0.2 to 190 g/10 min, still more preferably of from 0.3 to 180 g/10min, still more preferably of from 0.5 to 170 g/10min, still more preferably of from 0.6 to 160 g/10 min, still more preferably of from 0.7 to 150 g/10 min, and most preferably of from 0.8 to 140 g/10 min.

Embodiments of the composition, be it used as such or as a component of the polymer blend, may have a selected profile of properties (including $T_3$, $T_c$, XS, PI ratio, MFR) which is useful for providing polymer blends having a high content of one or more recycled polymers, properties at least comparable to or better than those fully virgin polymer compositions, involving a low manufacturing complexity and resulting in a reduced carbon footprint. The selected profile of properties of the composition is expressed in accordance with above-mentioned equation (1) and results in a predetermined I value, which may be at least greater than 4.

According to one or more embodiments, I is >4.0, preferably ≥5.0, more preferably ≥6.0, still more preferably ≥7.0, still more preferably ≥8.0, still more preferably ≥9.0, still more preferably ≥9.5, and most preferably ≥9.6.

According to one or more embodiments, I is of from >4.0 to 30, preferably of from 5.0 to 25, more preferably of from 6.0 to 20, still more preferably of from 7.0 to 18, still more preferably of from 8.0 to 16, still more preferably of from 9.0 to 14, and most preferably of from 9.5 to 13.5.

According to one or more embodiments, in equation (1):

$T_3$ is of from 115.5°C to 140.0°C, $T_c$ is of from 115.0°C to 145.0°C, XS is ≤5.5wt%, the PI ratio is of from 0.90 to 1.23, in equation (2):

MFR is of from 0.1 to 200g/10min, and
I is >4.0.

According to one or more embodiments, in equation (1):

$T_3$ is of from 116.0°C to 135.0°C, $T_c$ is of from 117.0°C to 140.0°C, XS is ≤5.0wt%, the PI ratio is of from 0.91 to 1.20, in equation (2):

MFR is of from 0.2 to 190g/10min, and
I is >5.0.

According to one or more embodiments, in equation (1):

$T_3$ is of from 117.3°C to 120.0°C, Tc is of from 129.0°C to 135.0°C, XS is ≤2.4wt%, the PI ratio is of from 0.95 to 1.13, in equation (2):

MFR is of from 0.8 to 140g/10min, and
I is ≥9.6.

**The one or more polypropylene-based polymers**

According to one or more embodiments, the one or more polypropylene-based polymers comprise homopolymers and/or copolymers. According to one or more embodiments, the one or more polypropylene-based polymers comprise homopolymers. According to one or more embodiments, the one or more polypropylene-based polymers comprise at least 50wt%, 60wt%, 70wt%, 80wt%, 90wt%, 95wt%, or 99wt% of homopolymers. According to one or more embodiments, the one or more polypropylene-based polymers are homopolymers.

According to one or more embodiments, the combination of properties of the composition can be achieved by producing the one or more polypropylene-based polymers by using a non-phthalate catalyst.

According to one or more embodiments, the one or more polypropylene-based polymers are produced by using a Ziegler-Natta catalyst comprising an internal donor, optionally in combination with an external donor, and one or more optional dedicated additives.

According to one or more embodiments, the internal donor may be selected from the group of diethers, aliphatic diesters, aromatic diesters, succinates, citraconates, maleates, dibenzoates. According to one or more embodiments, the internal donor is selected from the group of 1,3-diethers.

. According to one or more embodiments, the 1,3-diether internal donor comprises 2-isopropyl-2-isopentyl-1,3-dimethoxypropane (I3I5).

According to one or more embodiments, the one or more polypropylene-based polymers are obtained by performing a propylene polymerization in a vertically-stirred gas phase reactor, for example of the Novolen type, for example using a stereospecific $MgCl_2$-xROH-supported Ziegler-Natta catalyst containing a 1,3-diether-based internal donor (ID), for example at 30 bar and 75°C, and by using an external donor, such as, for example, isobutyl(isopropyl)dimethoxysilane (CAS 111439-76-0), to achieve high isotacticity levels. According to one or more embodiments, the 1,3-diether-based internal donor is preferably a 2-isopropyl-2-isopentyl-1,3 dimethoxypropane (CAS 129228-11-1). According to one or more embodiments, the ID/Mg ratio is preferably 0.19.

According to one or more embodiments, the one or more polypropylene-based polymers are produced using a Ziegler-Natta catalyst with a ratio between the internal donor and magnesium (ID/Mg) of at least 0.14, preferably of from 0.14 to 0.40, more preferably of from 0.16 to 0.35, still more preferably of from 0.18 to 0.30, still more preferably of from 0.18 to 0.25, still more preferably of from 0.18 to 0.20, and most preferably with a ratio between the internal donor and magnesium (ID/Mg) of 0.19.

According to one or more embodiments, the one or more polypropylene-based polymers are produced using a Ziegler-Natta catalyst with an internal donor according to any one of the embodiments described above in combination with an external donor selected from the group of alkoxy silanes, preferably from the group of dimethoxysilanes, most preferably the external donor is isobutyl(isopropyl)dimethoxysilane (CAS 111439-76-0).

According to one or more embodiments, the composition comprises the one or more polypropylene-based polymers in an amount of from 50wt% to 99.95wt% with respect to the total weight of the composition according to a), more preferably of from 55wt% to 99.92wt%, still more preferably of from 60wt% to 99.90wt%, still more preferably of from 65wt% to 99.88wt%, still more preferably of from 70wt% to 99.85wt%, still more preferably of from 75wt% to 99.85wt%, still more preferably of from 80wt% to 99.85wt%, still more preferably of from 85wt% to 99.85wt%, still more preferably of from 90wt% to 99.85wt%, still more preferably of from 95wt% to 99.85, still more preferably of from 96wt% to 99.85wt%, still more preferably of from 97wt% to 99.85wt%, still more preferably of from 98wt% to 99.85wt%, and most preferably of from 98.5wt% to 99.85wt% with respect to the total weight of the composition.

**The one or more additives**

According to one or more embodiments, the composition further comprises one or more additives. According to one or more embodiments, the one or more additives may be used in the production of the one or more polypropylene-based polymers and/or may be added to the one or more polypropylene-based polymers after the production thereof. In either case, the use of one or more additives may result in high process stability and enhance performance of the overall composition.

According to one or more embodiments, the one or more additives are selected from the group comprising or consisting of antioxidants, acid scavengers, antistatic agents, nucleating agents, clarifiers, slip agents, and antiblocking agents.

According to one or more embodiments, the antioxidants may comprise any suitable antioxidants known in the art. Preferably, antioxidants are selected from the group comprising phenolic antioxidants, amine antioxidants, hydroxylamine antioxidants, phosphite antioxidants, phosphonite antioxidants, benzofuranone antioxidants, thiodipropionate antioxidants, acryloyl antioxidants and combinations thereof. For example, the phenolic antioxidants may comprise one or more sterically hindered phenolic compounds. Exemplary compounds for sterically hindered phenolic compounds may comprise pentaerythritol tetrakis[3-[3,5-di-tert-butyl-4-hydroxyphenyl] propionate (AO-1010), 1,3,5-trimethyl-2,4,6-tris(3,5-di-tert-butyl-4-hydroxybenzyl)benzene (AO-1330), and 1,3,5-tris(3,5-di-tert-butyl-4-hydroxybenzyl)-1,3,5-triazine-2,4,6(1H,3H,SH)-trione (AO-3114). For example, the amine antioxidants may comprise hindered amine compounds. Exemplary compounds may be poly(4-hydroxy-2,2,6,6-tetramethyl-1-piperidine ethanol-alt-1,4-butanedioic acid) (HAS 622), bis(2,2,6,6-tetramethyl-4-piperidyl) sebacate (HAS 770), and poly[[6-[(1,1,3,3-tetramethylbutyl)amino]-s-triazine-2,4-diyl]-[(2,2,6,6-tetramethyl-4-piperidyl)imino]-hexamethylene-[(2,2,6,6-tetramethyl-4-piperidyl)imino] (HAS 944). For example, the hydroxylamine antioxidants may comprise oxidized bis(hydrogenated tallow alkyl) amines. An exemplary compound may be bis(octadecyl)hydroxylamine (FS 042). For example, the phosphite antioxidants may comprise phosphite esters. Exemplary compounds may be tris(2,4-di-tert-butylphenyl)phosphite (AO-168), 3,9-bis(2,4-dicumylphenoxy)-2,4,8,10-tetraoxa-3,9-diphosphaspiro [5.5]undecane, and bis(2,6-di-ter-butyl-4-methylphenyl) pentaerythritol- diphosphite. For example, the phosphonite antioxidants may comprise phosphonite esters. An exemplary compound may be tetrakis(2,4-di-tert-butylphenyl)[1,1'-biphenyl]-4,4'-diylbis(phosphonite) (PEPQ). For example, the benzofuranone antioxidants may comprise 3-aryl-benzofuranones. An exemplary compound may be 5,7-di-tert-butyl-3-(3,4-dimethylphenyl)3H-benzofuran-2-one. For example, the thiodipropionate antioxidants may comprise thiodipropionic acid alkyl esters. An exemplary compound may be 3,3'-thiodipropionic acid dioctadecylester. For example, the acryloyl antioxidants may comprise acryloyl modified phenols. An exemplary compound may be 2-(1,1-dimethylethyl)-6-[[3-(1,1-dimethylethyl)-2-hydroxy-5-methylphenylymethyl-4-methylphenyl acrylate.

According to one or more embodiments, the acid scavengers may comprise any suitable acid scavengers known in the art. According to one or more embodiments, acid scavengers are selected from the group comprising metallic stearates, hydrotalcites, hydrocalumites, metallic oxides, metallic carbonates and combinations thereof. For example, the metallic stearates may comprise calcium stearate and zinc stearate. For example, the hydrotalcites may comprise $Mg_{4.3}Al_2(OH)_{12.6}CO_3 \bullet mH_2O$ (DHT). For example, the hydrocalumites may comprise $[Ca_2Al(OH)_6]OH \bullet mH_2O$, $[Ca_2Al(OH)_6]CO_3 \bullet mH_2O$, $[Ca_2Al(OH)_6]HPO_3 \bullet mH_2O$, $[Ca_2Al(OH)_6]SO_4 \bullet mH_2O$, $[Ca_2Al(OH)_6]Cl \bullet mH_2O$ and combinations thereof. For example, the metallic oxides may comprise zinc oxide, calcium oxide, magnesium oxide and combinations thereof. For example, the metallic carbonates may comprise zinc carbonate, calcium carbonate, magnesium carbonate and combinations thereof.

According to one or more embodiments, the nucleating agents or clarifiers may comprise any suitable nucleating agents or clarifiers known in the art. Furthermore, according to one or more embodiments, nucleating agents or clarifiers can be selected from the group comprising talc, metal benzoates, metal sulfates, carboxylic acid salts, phosphate ester salts, sorbitol-based clarifiers, nonitol-based clarifiers and combinations thereof. For example, the metal benzoates may comprise sodium benzoate, lithium benzoate and aluminium hydroxy bis-(4-tert-butyl) benzoate. For example, the metal sulfates may comprise barium sulfate. For example, the carboxylic acid salts may comprise 1,2-cyclohexane dicarboxylic acid metal salts and bicyclo [2.2.1] heptane- 2,3-dicarboxylic acid metal salts. For example, the phosphate ester salts may comprise lithium 2,2'-methylene-bis-(4,6-di-tert-butylphenyl) phosphate, sodium 2,2'-methylene-bis-(4,6-di-tert-butylphenyl) phosphate, aluminium hydroxy 2,2'-methylene-bis-(4,6-di-tert-butylphenyl) phosphate. For example, the sorbitol-based clarifiers may comprise 1,3:2,4-bis(3,4-dimethylbenzylidene)sorbitol (DMDBS), 1,3:2,4-bis(p-methyl-benzylidene) sorbitol (MDBS), 1,3:2,4-dibenzylidene sorbitol (DBS). For example, the nonitol-based clarifiers may comprise 1,2,3-tridesoxy-4,6:5,7-bis-O-[(4-propylphenyl) methylene]nonitol. Commercial examples for nucleating agents and clarifiers include Milliken HPN-600ei, Milliken HPN-68L, Milliken HPN-20E, Milliken HPN-715, Milliken Millad 3988, Milliken Millad NX 8000, Adeka MI.NA.08, Adeka NA-11, Adeka NA-21, Adeka NA-27, Adeka NA-71.

According to one or more embodiments, the antistatic agents may comprise any suitable antistatic agents known in the art. According to one or more embodiments, antistatic agents include glycerol monostearates (GMS-55, GMS-90) or ethoxylated alkyl amines.

According to one or more embodiments, the slip agents may comprise any suitable slip agents known in the art. Slip agent include erucamides and oleamides.

According to one or more embodiments, the antiblocking agents may comprise any suitable antiblocking agents known in the art. According to one or more embodiments antiblocking agents include silica.

According to one or more embodiments, the one or more additives comprise antioxidants, acid scavengers and nucleating agents, preferably the one or more additives comprise antioxidants, acid scavengers, antistatic agents and nucleating agents, still more preferably the one or more additives comprise antioxidants, acid scavengers, antistatic agents, nucleating agents and clarifiers, still more preferably the one or more additives comprise antioxidants, acid scavengers, antistatic agents, nucleating agents, clarifiers and slip agents, and most preferably the one or more additives comprise antioxidants, acid scavengers, antistatic agents, nucleating agents, clarifiers, slip agents and antiblocking agents.

The polymer blend according to one or more embodiments provides better material properties, reduced carbon footprint, and a more efficient use of natural resources compared to state-of-the-art blends based on recycled polymers. Furthermore, the polymer blend according to one or more embodiments offers at least comparable or better material properties compared to fully virgin polymer compositions, while the carbon footprint of the composition and the manufacturing complexity thereof is significantly lower.

According to one or more embodiments, the composition comprises the one or more additives in an amount of from 0.05 to 5wt% of the total weight of the composition, preferably of from 0.08 to 4wt%, more preferably of from 0.10 to 3wt%, still more preferably of from 0.12 to 2wt%, most preferably the composition comprises the one or more additives in an amount of from 0.15 to 1.5wt% of the total weight of the composition.

According to one or more embodiments, when the one or more additives are added to the one or more polypropylene-based polymers after the one or more polypropylene-based polymers are produced, the one or more additives are selected from the group comprising, for example consisting, of antioxidants and acid scavengers.

According to one or more embodiments, the composition is present in an amount of from 1wt% to 99wt% of the total weight of the polymer blend, preferably of from 2wt% to 90wt%, more preferably of from 2wt% to 80wt%, still more preferably of from 2wt% to 70wt%, still more preferably of from 2wt% to 60wt%, still more preferably of from 3wt% to 55wt%, still more preferably of from 4wt% to 50wt%, still more preferably of from 5wt% to 50wt%, still more preferably of from 10wt% to 50wt%, still more preferably of from 15 wt% to 50wt%, and most preferably the composition is present in an amount of from 15wt% to 45wt% of the total weight of the polymer blend.

**The at least one recycled polymer**

In the present description and the following claims, the terms "recycled polymer" is used to indicate that the polymer is recovered from post-consumer waste or industrial waste. Post-consumer waste refers to objects having completed at least a first use cycle (or life cycle), *i.e.*, having already served their first purpose, while industrial waste refers to manufacturing scrap, which does not normally reach a customer.

According to one or more embodiments, the at least one recycled polymer may comprise, in addition to one or more polymers recovered from post-consumer waste or industrial waste, up to 20wt%, preferably up to 17wt%, more preferably up to 3wt%, still more preferably up to 1wt%, and most preferably up to 0.1wt% of one or more polymers originating from the first use.

According to one or more embodiments, the at least one recycled polymer comprises one or more polypropylene-based polymers. The one or more recycled polypropylene-based polymers may comprise recycled polypropylene homopolymers, recycled polypropylene copolymers and compositions or blends comprising recycled polypropylene homopolymers and/or recycled polypropylene copolymers.

According to one or more embodiments, the at least one recycled polymer comprises a recycled polymer composition obtained from recycled waste by means of plastic recycling processes known in the art. Recycled polymer compositions are commercially available, e.g., from Systec Plastics GmbH (Germany), Interzero GmbH & Co. KG (Germany), Resource Plastics Corp. (Canada), Kruschitz GmbH, Plastics and Recycling (Austria), Vogt Plastik GmbH (Germany), mtm Plastics GmbH (Germany), CT Polymers (USA), etc. Non-exhaustive examples of recycled polymers are Systalen PP (Systec Plastics GmbH) and DIPOLEN PP (mtm Plastics GmbH). Embodiments of the present disclosure may use a broad range of recycled polymer compositions. The recycled polymer or polymer composition may be in the form of pellets.

According to one or more embodiments, the at least one recycled polymer may have a MFR value of from 1 to 200 g/10 min, preferably of from 2 to 150 g/10 min, still more preferably of from 3 to 120 g/10min, still more preferably of from 4 to 100 g/10min, still more preferably of from 5 to 80 g/10 min, still more preferably of from 6 to 60 g/10 min, still more preferably of from 7 to 50 g/10 min, still more preferably of from 8 to 40 g/10 min, still more preferably of from 9 to 35 g/10 min, still more preferably of from 10 to 30 g/10 min, and most preferably of from 12 to 25 g/10 min.

According to one or more embodiments, the at least one recycled polymer may comprise an ethylene content of $\leq$50wt%, preferably of $\leq$45wt%, more preferably of $\leq$40wt%, still more preferably of $\leq$35wt%, still more preferably of $\leq$30wt%, still more preferably of $\leq$25wt%, still more preferably of $\leq$20wt%, still more preferably of $\leq$18wt%, still more preferably of $\leq$17wt%, still more preferably of $\leq$16wt%, and most preferably of $\leq$15wt%.

In the present description and the following claims, the terms "ethylene content" are used to indicate a fraction in wt% of C2H4 units in polymers derived from the polymerization of ethylene. Ethylene contents are determined by Fourier Transform Infrared (FTIR) spectroscopy on 200 $\pm$ 50 $\mu$m films using a Tensor 27 FTIR spectrometer (Bruker Corp., USA). The films are prepared using a hot press at 200°C and 50 bar, and the spectral absorption is corrected for actual film thickness. The FTIR spectra are acquired in the mid infrared region of 4000 - 400 cm$^{-1}$ and the band between 750 - 700 cm$^{-1}$ is evaluated using a partial least-squares (PLS) algorithm in comparison to spectra of reference samples that were calibrated by 13C NMR (Haaland et al. Anal. Chem. 1988, 60, 1193-1202).

According to one or more embodiments, the at least one recycled polymer may comprise a polypropylene homopolymer and/or copolymer content of $\geq$50wt%, preferably of $\geq$55wt%, still more preferably of $\geq$60wt%, still more preferably of $\geq$65wt%, still more preferably $\geq$70wt%, still more preferably of $\geq$75wt%, still more preferably of $\geq$80wt%, and most preferably of from 85 to 100wt%.

In the present description and the following claims, the terms "polypropylene homopolymer and/or copolymer content" are used to indicate the fraction in wt% of polypropylene-based input material selected for the preparation of the at least one recycled polymer.

According to one or more embodiments, the at least recycled polymer may comprise a post-consumer waste or industrial waste content of $\geq$5wt%, preferably of $\geq$ 1 0wt%, still more preferably of $\geq$30wt%, still more preferably of $\geq$50wt%, still more preferably of $\geq$60wt%, still more preferably of $\geq$70wt%, still more preferably of $\geq$80wt%, still more preferably of $\geq$90wt%, still more preferably of $\geq$92wt%, still more preferably of $\geq$95wt%, still more preferably of $\geq$97wt%, still more preferably of $\geq$98wt%, and most preferably of $\geq$99wt%.

According to one or more embodiments, the at least one recycled polymer may have a Tc (ISO 11357-3) of from 90°C to 140°C, preferably of from 95°C to 135°C, more preferably of from 100°C to 130°C, still more preferably of from 105°C to 128°C, still more preferably of from 110°C to 127°C, still more preferably of from 112°C to 126°C, still more preferably of from 114°C to 126°C, still more preferably of from 116°C to 126°C, still more preferably of from 118°C to 126°C, still preferably of from 120°C to 126°C, still more preferably of from 122°C to 126°C, and most preferably of from 123°C to 126°C.

According to one or more embodiments, the at least one recycled polymer may have a flexural modulus (ISO 178) of ≤2200 MPa, preferably of ≤2000 MPa, more preferably of ≤1800 MPa, still more preferably of ≤1700 MPa, still more preferably of ≤1600 MPa, still more preferably of ≤1500 MPa, still more preferably of ≤1400 MPa, still more preferably of ≤1300 MPa, still more preferably of ≤1250 MPa, and most preferably of ≤1200 MPa.

According to one or more embodiments, the at least one recycled polymer may have a Charpy (notched) 23°C (ISO 179-1) of from 1.5 kJ/m$^2$ to 80 kJ/m$^2$, preferably of from 2.0 kJ/m$^2$ to 70 kJ/m$^2$, more preferably of from 2.5 kJ/m$^2$ to 60 kJ/m$^2$, still more preferably of from 3.0 kJ/m$^2$ to 50 kJ/m$^2$, still more preferably of from 3.5 kJ/m$^2$ to 40 kJ/m$^2$, still more preferably of from 4.0 kJ/m$^2$ to 30 kJ/m$^2$, still more preferably of from 4.5 kJ/m$^2$ to 20 kJ/m$^2$, still more preferably of from 5.0 kJ/m$^2$ to 15 kJ/m$^2$, still more preferably of from 5.0 kJ/m$^2$ to 10 kJ/m$^2$, still more preferably of from 5.0 kJ/m$^2$ to 8 kJ/m$^2$, still more preferably of from 5.0 kJ/m$^2$ to 7 kJ/m$^2$, and most preferably of from 5.0 kJ/m$^2$ to 6 kJ/m$^2$.

According to one or more embodiments, the at least one recycled polymer may be present in the polymer blend in an amount of from >0wt% to <100wt% of the total weight of the polymer blend, preferably of from 10 to 99wt%, more preferably of from 20 to 98wt%, still more preferably of from 30 to 95wt%, still more preferably of from 40 to 95wt%, still more preferably of from 45 to 95wt%, still more preferably of from 50 to 95wt%, and still more preferably of from 50 to 92wt%, still more preferably of from 50 to 90wt%, still more preferably of from 50 to 88wt%, and most preferably of from 55wt% to 85wt% of the total weight of the polymer blend.

**Embodiments of the Method of Preparing the Polymer Blend**

According to one or more embodiments, a method of preparing the polymer blend comprises mixing the composition and the at least one recycled polymer.

The composition and the at least one recycled polymer may be mixed by any suitable method known in the art for mixing polymers. According to one or more embodiments, the composition and the at least one recycled polymer are mixed using an extruder or a tumble mixer.

According to one or more embodiments, the method of preparing the polymer blend further comprises preparing the composition. According to one or more embodiments, preparing the composition comprises synthesizing one or more polypropylene polymers.

According to one or more embodiments, synthesizing the one or more polypropylene polymers comprises performing a propylene polymerization in a vertically-stirred gas phase reactor, for example of the Novolen type, for example using a stereospecific MgCl$_2$-xROH-supported Ziegler-Natta catalyst containing a non-phthalate internal donor (ID), for example at 30 bar and 75°C, and by using an external donor.

According to one or more embodiments, the internal donor is selected from the group consisting of diethers, aliphatic diesters, aromatic diesters, succinates, citraconates, maleates, dibenzoates, preferably from the group of 1,3-diethers. More preferably, the internal donor is 2-isopropyl-2-isopentyl-1,3 dimethoxypropane (CAS 129228-11-1).

According to one or more embodiments, the one or more polypropylene polymers are synthesized as described above using a Ziegler-Natta catalyst with a ratio between the internal donor and magnesium (ID/Mg) of at least 0.14, preferably of from 0.14 to 0.40, more preferably of from 0.16 to 0.35, still more preferably of from 0.18 to 0.30, still more preferably of from 0.18 to 0.25, still more preferably of from 0.18 to 0.20, and most preferably with a ratio between the internal donor and magnesium (ID/Mg) of 0.19.

According to one or more embodiments, the internal donor is 2-isopropyl-2-isopentyl-1,3 dimethoxypropane (CAS 129228-11-1) and the ID/Mg ratio is of at least 0.14, and for example 0.19.

According to one or more embodiments, the one or more polypropylene polymers are synthesized using a Ziegler-Natta catalyst with an internal donor as described above in combination with an external donor selected from the group of alkoxy silanes, preferably from the group of dimethoxysilanes. Preferably, the external donor is isobutyl(isopropyl)dimethoxysilane (CAS 111439-76-0).

According to one or more embodiments, the method of preparing the polymer blend comprises mixing the composition, the at least one recycled polymer, and optionally one or more additives as described above.

**The Composition**

The present disclosure relates to a composition as defined in any one of the embodiments of the polymer blend.

**Embodiments of uses of the composition and of the article**

According to one or more embodiments of the present disclosure, the composition may be used in a polymer blend according to one or more embodiments of the present disclosure.

One or more embodiments are directed to a use of the composition in a polymer blend for upgrading one or more post-consumer waste polymers or industrial waste polymers.

One or more embodiments are directed to an article comprising the composition according to any one of the embodiments herein described or the polymer blend according to any one of the embodiments herein described.

The article may be produced by any suitable method known in the art for forming articles from a polymer composition and/or polymer blend.

## Examples

### Compounding Trials

Examples IE-1 and IE-2 in accordance with embodiments of the disclosure and comparative examples CE-7 to CE-10 were prepared using a co-rotating twin-screw extruder (screw diameter D: 25.5 mm). The polymer compositions were extruded together with an additive premix for process stabilization. The additive premix contained Irganox 1010 (BASF SE, Germany), Irganox 168 (BASF SE, Germany), calcium stearate (Baerlocher GmbH, Germany), and Systalen C45003 (Systec Plastics GmbH, Germany) in a ratio of 1:1:1.8:7.6. The additive premix was dosed such that the final compositions contained additional 450 ppm of Irganox 1010, 450 ppm of Irganox 168, and 800 ppm of calcium stearate. All components were dosed using gravimetric feeders and through the main feeding port of the extruder. The compositions were extruded using a standard screw configuration containing conveying, kneading, transition, and back-mixing elements. The extruder was operated at 350 rpm and with an increasing temperature profile from 140 to 210°C. The produced polymer strands were cooled in a cold water bath and pelletized using a granulator. Between the preparation of different polymer blends, the extruder and feeders were cleaned to prevent cross-contamination.

From prepared examples IE-1 and IE-2 according to embodiments of the disclosure and comparative examples CE-7 to CE-10, test specimen were prepared according to ISO 19069-2 and ISO 20753. The test specimen were conditioned for 7 days at 23°C and 50% relative humidity prior to testing. Flexural modulus values were determined according to ISO 178. Charpy (notched) impact resistance values at 23°C were determined according to ISO 179-1/1eA on notched test specimen.

$$Stiffness\ Improvement\ [\%] = \left[ \frac{Elastic\ Modulus\ of\ the\ Example}{Elastic\ Modulus\ of\ the\ Reference} - 1 \right] \times 100\%$$

For calculation of the stiffness improvement, either elastic moduli from flexural testing according to ISO 178 or from tensile testing according to ISO 527-2 were used.

### Injection Molding Trials

Examples IE-3 and IE-4 in accordance with embodiments of the disclosure and comparative examples CE-11 and CE-12 were prepared by blending pellets of PCR-1 and CP-1, CP-3, P-4, or P-5 using a tumble mixer. The blended pellet mixtures were then directly fed into the hopper of an injection molding machine. The temperature profiles for the heating zones of the injection molding machine were as follows: for CE-11: 230°C / 225°C / 220°C / 215°C / 210°C, for CE-12: 200°C / 195°C / 190°C / 185°C / 180°C, for IE-3: 230°C / 225°C / 220°C / 215°C / 210°C, for IE-4: 200°C / 195°C / 190°C / 185°C / 180°C. Test specimen for mechanical testing were prepared according to ISO 19069-2 and ISO 20753. The test specimen were conditioned for 7 days at 23°C and 50% relative humidity prior to testing. Flexural modulus values were determined according to ISO 178. Charpy (notched) impact resistance values at 23°C were determined according to ISO 179-1/1eA on notched test specimen.

### Calculation of Reduction of the Use of Natural Resources and Carbon Footprint

The reduction of the use of natural resources and carbon footprint was calculated based on the following equations and literature values. For the calculations, the weight fraction of the "virgin polymer composition" comprising polymeric components and additives was taken into account, *i.e.,* the final polymeric material. "Virgin polymer composition" refers to materials which have not yet been converted to articles and have not been used by consumers or industry. Furthermore, the "virgin polymer composition" are characterized by not having been processed at elevated temperatures of $\geq 150$°C more than one time.

$$Reduction\ of\ the\ Use\ of\ Natural\ Resources\ [\%]$$

$$= (100wt\%$$

$$- Weight\ Fraction\ of\ virgin\ polymer\ composition\ [wt\%]) \times \frac{\%}{wt\%}$$

$$Carbon\ Footprint\ [kg\ CO_2 - eq./kg\ Material]$$

$$= f_{Virgin} \times (Carbon\ Footprint)_{Virgin}$$

$$+ f_{Recycled} \times (Carbon\ Footprint)_{Recycled}$$

where f: weight fraction [wt%]/100wt%

$$Reduction\ of\ Carbon\ Footprint\ [\%]$$

$$= \left[1 - \frac{Carbon\ Footprint\ [kg\ CO2 - eq./kg\ Material]}{(Carbon\ Footprint)_{Virgin}}\right] \times 100\%$$

Values considered for the carbon footprint calculation:

Virgin polymer composition: 1.72 kg $CO_2$-eq./ kg Material. Source: Average of Table 4 of Alsabri *et al. Polymers* 2021, 13, 3793.;
Recycled polymer composition: 0.8 kg $CO_2$-eq./ kg Material. Source: Systec Plastics GmbH, Germany (supplier of PCR-1 (CE-5) and PCR-2 (CE-6)).

**Synthesis Examples**

**CP-1:** Polypropylene polymer composition CP-1 was prepared by synthesizing a polypropylene homopolymer in a vertically-stirred gas phase reactor (Novolen type) at 30 bar and 80°C using a stereospecific $MgCl_2$-supported granular Ziegler-Natta catalyst containing diisobutyl phthalate (DIBP) as internal donor. External donor (cyclohexylmethyl-dimethoxysilane) was fed to the reactor to increase isotacticity. Hydrogen was fed to the reactor to control polymer molecular weight, and the feed rate was adjusted to achieve an MFR (230°C, 2. 16kg) of about 1 g/10 min. The obtained powder was extruded on a twin-screw extruder with 160 ppm Cyanox 1790 (Solvay S.A., Belgium), 600 ppm ADK STAB PEP-36 (Adeka Corp., Japan), and 600 ppm calcium stearate with respect to the total composition.

**Comparative Example CP-2:** Polypropylene polymer composition CP-2 was prepared by synthesizing a polypropylene homopolymer in a vertically-stirred gas phase reactor (Novolen type) at 30 bar and 80°C using a stereospecific $MgCl_2$-supported granular Ziegler-Natta catalyst containing diisobutyl phthalate (DIBP) as internal donor. External donor (cyclohexylmethyl-dimethoxysilane) was fed to the reactor to increase isotacticity. Hydrogen was fed to the reactor to control polymer molecular weight, and the feed rate was adjusted to achieve an MFR (230°C, 2.16kg) of about 12 g/10 min. The obtained powder was extruded on a twin-screw extruder with 500 ppm Irganox 1010 (BASF SE, Germany), 500 ppm Irganox 168 (BASF SE, Germany), and 800 ppm calcium stearate with respect to the total composition.

**Comparative Example CP-3:** Polypropylene polymer composition CP-3 was prepared by synthesizing a polypropylene homopolymer in a vertically-stirred gas phase reactor (Novolen type) at 30 bar and 75°C using a stereospecific $MgCl_2$-xROH-supported Ziegler-Natta catalyst containing a diether-based internal donor. The catalyst was prepared according to US 10,066,034 B2 with 2-isopropyl-2-isopentyl-1,3-dimethoxypropane (I3I5) as internal donor (ID), an ID/Mg ratio of 0.13, with the difference of stationary titanation steps instead of Soxhlet extraction. External donor (isobutyl (isopropyl) dimethoxysilane) was fed to the reactor to increase isotacticity. Hydrogen was fed to the reactor to control polymer molecular weight, and the feed rate was adjusted to achieve an MFR (230°C, 2.16kg) of about 145 g/10 min. The obtained powder was extruded on a twin-screw extruder with 450 ppm Irganox 1010 (BASF SE, Germany), 450 ppm Irganox 168 (BASF SE, Germany), and 800 ppm calcium stearate with respect to the total composition.

**P-4:** Polypropylene polymer composition P-4 according to embodiments of the disclosure was prepared by synthesizing a polypropylene homopolymer in a vertically-stirred gas phase reactor (Novolen type) at 30 bar and 75°C using a stereospecific $MgCl_2$-xROH-supported Ziegler-Natta catalyst containing a diether-based internal donor. The catalyst was prepared according to US 10,066,034 B2 with 2-isopropyl-2-isopentyl-1,3-dimethoxypropane (I3I5) as internal donor (ID), an ID/Mg ratio of 0.19, with the difference of stationary titanation steps instead of Soxhlet extraction. External donor (isobutyl(isopropyl) dimethoxysilane) was fed to the reactor to increase isotacticity. Hydrogen was fed to the reactor to control polymer molecular weight, and the feed rate was adjusted to achieve an MFR (230°C, 2.16kg) of about 1 g/10 min. The obtained powder was extruded on a twin-screw extruder with 450 ppm Irganox 1010 (BASF SE, Germany), 900 ppm Irganox 168 (BASF SE, Germany), 300 ppm DHT-4A (Kisuma Chemicals B.V., Netherlands), and 4500 ppm NA-27 (Adeka Corp., Japan) with respect to the total composition.

P-5: Polypropylene polymer composition P-5 according to embodiments of the disclosure was prepared by synthesizing a polypropylene homopolymer in a vertically-stirred gas phase reactor (Novolen type) at 30 bar and 75°C using a stereospecific $MgCl_2$-xROH-supported Ziegler-Natta catalyst containing a diether-based internal donor. The catalyst was prepared according to US 10,066,034 B2 with 2-isopropyl-2-isopentyl-1,3-dimethoxypropane (I3I5) as internal donor (ID), an ID/Mg ratio of 0.19, with the difference of stationary titanation steps instead of Soxhlet extraction. External donor (isobutyl(isopropyl) dimethoxysilane) was fed to the reactor to increase isotacticity. Hydrogen was fed to the reactor to control polymer molecular weight, and the feed rate was adjusted to achieve an MFR (230°C, 2.16kg) of about 135 g/10 min. The obtained powder was extruded on a twin-screw extruder with 450 ppm Irganox 1010 (BASF SE, Germany), 450 ppm Irganox 168 (BASF SE, Germany), 800 ppm calcium stearate, 600 ppm glycerol mono-stearate (GMS-55), and 500 ppm NA-27 (Adeka Corp., Japan) with respect to the total composition.

**Comparative Examples of virgin and recycled polypropylene compositions:**

CE-1: Comparative Example CE-1 was a virgin polypropylene homopolymer composition that was prepared by synthesizing a polypropylene homopolymer in a vertically-stirred gas phase reactor (Novolen type) using a stereospecific $MgCl_2$-xROH-supported Ziegler-Natta catalyst containing a diether-based internal donor. The catalyst was prepared according to US 10,066,034 B2 with 2-isopropyl-2-isopentyl-1,3-dimethoxypropane (I3I5) as internal donor (ID), an ID/Mg ratio of 0.13, with the difference of stationary titanation steps instead of Soxhlet extraction. External donor was fed to the reactor to increase isotacticity. Hydrogen was fed to the reactor to control polymer molecular weight. The obtained powder was extruded on a twin-screw extruder with an additive package comprising antioxidants, acid scavengers, and a nucleating agent.

CE-2: Comparative Example CE-2 was a virgin polypropylene homopolymer composition that was prepared by synthesizing a polypropylene homopolymer in a vertically-stirred gas phase reactor (Novolen type) using a stereospecific $MgCl_2$-xROH-supported Ziegler-Natta catalyst containing a diether-based internal donor. The catalyst was prepared according to US 10,066,034 B2 with 2-isopropyl-2-isopentyl-1,3-dimethoxypropane (I3I5) as internal donor (ID), an ID/Mg ratio of 0.13, with the difference of stationary titanation steps instead of Soxhlet extraction. External donor was fed to the reactor to increase isotacticity. Hydrogen was fed to the reactor to control polymer molecular weight. The obtained powder was extruded on a twin-screw extruder with an additive package comprising antioxidants, acid scavengers, but no nucleating agent.

CE-3: Comparative Example CE-3 was a virgin propylene ethylene random copolymer composition that was prepared by synthesizing a propylene ethylene random copolymer in a vertically-stirred gas phase reactor (Novolen type) using a stereospecific $MgCl_2$xROH-supported Ziegler-Natta catalyst containing diisobutyl phthalate (DIBP) as internal donor. External donor was fed to the reactor to increase isotacticity. Hydrogen was fed to the reactor to control polymer molecular weight. The obtained powder was extruded on a twin-screw extruder with an additive package comprising antioxidants, acid scavengers, and a clarifier.

CE-4: Comparative Example CE-4 was a virgin propylene ethylene impact copolymer composition that was prepared by synthesizing a propylene ethylene impact copolymer in a vertically-stirred gas phase two-reactor cascade (Novolen type) using a stereospecific $MgCl_2$xROH-supported Ziegler-Natta catalyst containing diisobutyl phthalate (DIBP) as internal donor. Propylene, hydrogen, and external donor were fed to the first reactor to produce a low molecular weight homopolymer, which was then transferred to the second reactor. In the second reactor, propylene, ethylene, and isopropanol were fed to achieve a propylene ethylene impact copolymer with heterophasic morphology. The obtained powder was extruded on a twin-screw extruder with an additive package comprising antioxidants, acid scavengers, and a nucleating agent.

CE-5: Comparative Example CE-5 was a recycled polymer composition PCR-1 from polypropylene-based input streams, i.e., the commercially available product Systalen C45003 of Systec Plastics GmbH, Germany. The product originated from >99% post-consumer waste.

CE-6: Comparative Example CE-6 was a recycled polymer composition PCR-2 from polypropylene-based input streams, i.e., the commercially available product Systalen C14002 of Systec Plastics GmbH, Germany. The product originated from >99% post-consumer waste.

**Examples from Compounding Trials** (with respect to the components before adding the additive premix for process stabilization):

**CE-7:** 100% PCR-1
**CE-8:** Polymer blend: 60% PCR-1 + 40% CP-2
**CE-9:** Polymer blend: 80% PCR-1 + 20% CP-1
**CE-10:** Polymer blend: 60% PCR-1 + 40% CP-1
**IE-1:** Polymer blend: 80% PCR-1 + 20% P-4
**IE-2:** Polymer blend: 60% PCR-1 + 40% P-4

**Examples from Injection Molding Trials:**

**CE-11:** Polymer blend: 80% PCR-1 + 20% CP-1
**CE-12:** Polymer blend: 80% PCR-1 + 20% CP-3
**IE-3:** Polymer blend: 80% PCR-1 + 20% P-4
**IE-4:** Polymer blend: 80% PCR-1 + 20% P-5

**Results:**

Examples CP-1-CP-3 and P-4-P-5 were prepared as described above. In Table 1 below, the properties of the prepared polypropylene polymer compositions of comparative examples CP-1 to CP-3 and of the examples according to embodiments of the present disclosure P-4 and P-5 are shown. It can be seen that the combination of properties MFR, XS, $T_3$, PI and $T_c$ of examples P-4 and P-5 according to embodiments of the present disclosure lead to higher I values of 9.6 and 11.2 compared to the lower I values of comparative examples CP-1 to CP-3 of 1.1 up to 4.0.

**Table 1: Properties of polymer compositions used for the preparation of inventive and comparative examples.**

| Polymer | CP-1 | CP-2 | CP-3 | **P-4** | **P-5** |
|---|---|---|---|---|---|
| Purpose | for CE | for CE | for CE | **for IE** | **for IE** |
| Internal Donor (ID) | DIBP | DIBP | I3I5 | **I3I5** | **I3I5** |
| ID/Mg ratio [-] | N/A | N/A | 0.13 | **0.19** | **0.19** |
| MFR (2.16kg, 230°C) [g/10 min] (ISO 1133) | 1.3 | 12.7 | 144.4 | **0.9** | **134.4** |
| XS [wt%] | 2.7 | 3.8 | 2.3 | **2.2** | **2.4** |
| $T_3$ [°C] | 116.9 | 118.2 | 116.3 | **117.6** | **117.3** |
| PI [-] | 4.7 | 4.1 | 2.2 | **3.9** | **2.4** |
| PI Ratio [-] | 1.23 | 1.30 | 0.90 | **0.99** | **0.98** |
| $T_M$ [°C] (ISO 11357-3) | 162.3 | 163.9 | 160.1 | **165.9** | **164.6** |
| $T_C$ [°C] (ISO 11357-3) | 111.9 | 112.3 | 117.0 | **131.8** | **130.2** |
| Relation I | 1.1 | 1.1 | 4.0 | **11.2** | **9.6** |

Moreover, comparative examples CE-1 to CE-6 were prepared as described above or were commercially available. In Table 2 part 1 and part 2 the properties of comparative examples CE-1 to CE-6 are shown. Furthermore, the values of the reduction of the use of natural resources, the carbon footprint, and the reduction of carbon footprint are shown.

As can be seen, the fully virgin polymer compositions of CE-1 to CE-4 had a high carbon footprint. The fully recycled polymer compositions of comparative examples CE-5 and CE-6 had a reduced carbon footprint and had used a reduced amount of natural resources, but the flexural modulus values (stiffness) of the fully recycled polymer compositions (1088 to 1164) are lower compared to the flexural modulus values of the fully virgin polymer compositions of CE-1 to CE-4 (1256 to 1500).

**Table 2 part 1: Properties of comparative examples of virgin and recycled polypropylene compositions.**

| Example | CE-1 | CE-2 | CE-3 |
|---|---|---|---|
| Composition | Virgin PP Homo | Virgin PP Homo | Virgin PP Random |
| MFR (2.16kg, 230°C) [g/10 min] (ISO 1133) | 14.0 | 11.1 | 13.2 |
| PI [-] | 3.4 | 2.9 | 2.7 |
| $T_M$ [°C] (ISO 11357-3) | 163.9 | 163.5 | 152.6 |
| $T_C$ [°C] (ISO 11357-3) | 124.2 | 120.1 | 122.5 |
| Ethylene Content [wt%] | - | - | 2.3 |
| Flexural Modulus [MPa] (ISO 178) | 1500 | 1344 | 1256 |
| Charpy (Notched) 23°C [kJ/m$^2$] (ISO 179-1) | 3.1 | 3.6 | 5.2 |
| Weight Fraction of Virgin Polymer Composition [wt%] | 100 | 100 | 100 |
| Reduction of the Use of Natural Resources [%] | 0 | 0 | 0 |
| Carbon Footprint [kg $CO_2$eq./ kg Material] | 1.72 | 1.72 | 1.72 |
| Reduction of Carbon Footprint [%] | 0 | 0 | 0 |

**Table 2 part 2: Properties of comparative examples of virgin and recycled polypropylene compositions.**

| Example | CE-4 | CE-5 | CE-6 |
|---|---|---|---|
| Composition | Virgin PP ICP | PCR-1 neat | PCR-2 neat |
| MFR (2.16kg, 230°C) [g/10 min] (ISO 1133) | 21.2 | 21.3 | 15.0 |
| PI [-] | 3.1 | 3.1 | 3.5 |
| $T_M$ [°C] (ISO 11357-3) | 164.0 | 161.7 | 162.0 |
| $T_C$ [°C] (ISO 11357-3) | 132.8 | 124.4 | 124.8 |
| Ethylene Content [wt%] | 4.7 | 13.8 | 8.6 |
| Flexural Modulus [MPa] (ISO 178) | 1444 | 1088 | 1164 |
| Charpy (Notched) 23°C [kJ/m$^2$] (ISO 179-1) | 6.0 | 5.6 | 5.1 |
| Weight Fraction of Virgin Polymer Composition [wt%] | 100 | 0 | 0 |
| Reduction of the Use of Natural Resources [%] | 0 | 100 | 100 |
| Carbon Footprint [kg $CO_2$eq./ kg Material] | 1.72 | 0.8 | 0.8 |
| Reduction of Carbon Footprint [%] | 0 | 53 | 53 |

Furthermore, the comparative examples CE-7 to CE-10 and the examples IE-1 and IE-2 were prepared according to the method "Compounding Trials" described above. The properties of CE-7 to CE-10, IE-1 and IE-2 are shown in Table 3 part 1 and part 2 below. Furthermore, the respective values stiffness improvement, the reduction of the use of natural resources, the carbon footprint, and the reduction of carbon footprint are shown.

**Table 3 part 1: Properties of comparative examples CE-7 to CE-10 and examples IE-1 and IE-2 from Compounding Trials.**

| Example | CE-7 | CE-8 | CE-9 |
|---|---|---|---|
| Composition* | 100%PCR-1 (extruded) | 60%PCR-1 +40% CP-2 | 80%PCR-1 +20% CP-1 |
| MFR (2.16kg, 230°C) [g/10 min] (ISO 1133) | 21.0 | 16.8 | 10.1 |
| PI [-] | 3.1 | 3.5 | 3.6 |
| $T_M$ [°C] (ISO 11357-3) | 161.5 | 163.0 | 162.0 |
| $T_C$ [°C] (ISO 11357-3) | 124.5 | 124.8 | 124.6 |
| Flexural Modulus [MPa] (ISO 178) | 1170 | 1350 | 1250 |
| Stiffness Improvement [%] | 0 (Ref.) | 15 | 7 |
| Charpy (Notched) 23°C [kJ/m$^2$] (ISO 179-1) | 5.7 | 4.8 | 5.9 |
| Weight Fraction of Virgin Polymer Composition [wt%]* | 0 | 40 | 20 |
| Reduction of the Use of Natural Resources [%] | 100 | 60 | 80 |
| Carbon Footprint [kg $CO_2$-eq./ kg Material] | 0.8 | 1.17 | 0.98 |
| Reduction of Carbon Footprint [%] | 53 | 32 | 43 |
| (*): with respect to the components before adding the additive premix for process stabilization. | | | |

**Table 3 part 2: Properties of comparative examples CE-7 to CE-10 and examples IE-1 and IE-2 from Compounding Trials.**

| Example | CE-10 | IE-1 | IE-2 |
|---|---|---|---|
| Composition* | 60%PCR-1 +40%CP-1 | **80%PCR-1 +20%P-4** | **60%PCR-1 +40%P-4** |
| MFR (2.16kg, 230°C) [g/10 min] (ISO 1133) | 5.9 | **9.6** | **4.6** |
| PI [-] | 4.2 | **3.9** | **4.3** |
| $T_M$ [°C] (ISO 11357-3) | 162.1 | **163.6** | **164.5** |
| $T_C$ [°C] (ISO 11357-3) | 124.5 | **129.4** | **131.3** |
| Flexural Modulus [MPa] (ISO 178) | 1340 | **1410** | **1590** |
| Stiffness Improvement [%] | 15 | **21** | **36** |
| Charpy (Notched) 23°C [kJ/m$^2$] (ISO 179-1) | 6.0 | **5.4** | **5.5** |
| Weight Fraction of Virgin Polymer Composition [wt%]* | 40 | **20** | **40** |
| Reduction of the Use of Natural Resources [%] | 60 | **80** | **60** |
| Carbon Footprint [kg $CO_2$-eq./ kg Material] | 1.17 | **0.98** | **1.17** |

(continued)

| Example | CE-10 | **IE-1** | **IE-2** |
|---|---|---|---|
| Composition* | 60%PCR-1 +40%CP-1 | **80%PCR-1 +20%P-4** | **60%PCR-1 +40%P-4** |
| Reduction of Carbon Footprint [%] | 32 | **43** | **32** |
| (*): with respect to the components before adding the additive premix for process stabilization. | | | |

As can be seen from Table 3 part 1 and part 2, the polymer blends of examples IE-1 and IE-2 had a reduction of carbon footprint of 43% and 32% compared to the virgin polymer compositions of CE-1 to CE-4. Comparative examples CE-7 to CE-10 had a reduction of carbon footprint of 32% up to 53% compared to the virgin polymer compositions of CE-1 to CE-4. However, the flexural modulus values (stiffness) of comparative example CE-7, containing 100% of recycled polymer composition PCR-1, was lower compared to the flexural modulus values of the fully virgin polymer compositions of comparative examples CE-1 to CE-4. In addition, it can be seen that the polymer blends of comparative examples CE-8 to CE-10, comprising virgin polymer compositions according to comparative examples CP-1 and CP-2, had only a low improvement of stiffness of 7% to 15%.

The polymer blends of examples IE-1 and IE-2, comprising the virgin polymer composition of example P-4 having the specific combination of properties resulting in a I value of >4.0, had a high reduction of carbon footprint and a high reduction of use of natural resources in combination with a high improvement of stiffness of 21% to 36%. The stiffness improvement of IE-1 and IE-2 was higher compared to the stiffness improvement of comparative examples CE-8 to CE-10.

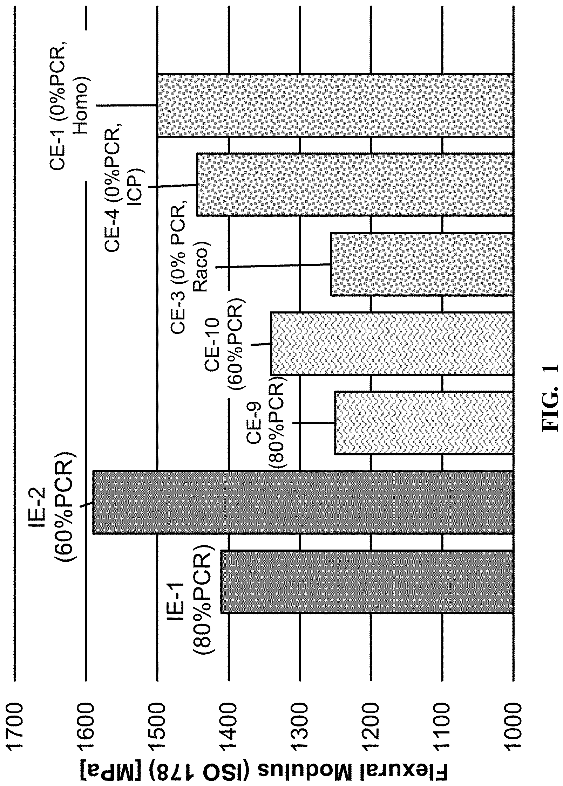

Moreover, as can be seen from Figure 1, the polymer blends of examples IE-1 and IE-2 had flexural modulus values, which were higher compared to comparative examples CE-9 and CE-10 containing the polymer composition of comparative example CP-1. Additionally, the flexural modulus values of the polymer blends of examples IE-1 and IE-2 were comparable or even higher with respect to the flexural modulus values of the fully virgin polymer compositions of CE-1 to CE-4. Therefore, the polymer blends of examples IE-1 and IE-2, comprising the polypropylene polymer composition according to embodiments of the present disclosure (according to example P-4), had a low carbon footprint and excellent stiffness values, which were comparable or even improved compared to fully virgin polymer compositions.

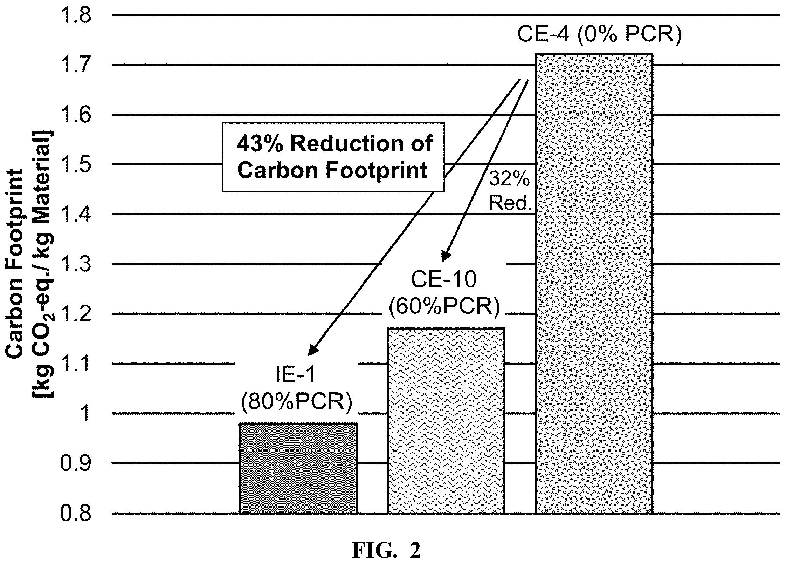

As shown in Figure 2, the polymer blends of example IE-1, which had an excellent stiffness improvement of 21% (c.f. Table 3 part 2), had a reduction of carbon footprint of 43%. Whereas the polymer blend of CE-10 only had a reduction of carbon footprint of 32% with a low stiffness improvement of 15% (c.f. Table 3 part 2). All examples and comparative examples of Figure 2 had approximately the same flexural modulus (stiffness) of 1400 MPa ($\pm$5%). Thus, example IE-1 provided the highest reduction of carbon footprint while achieving identical material properties.

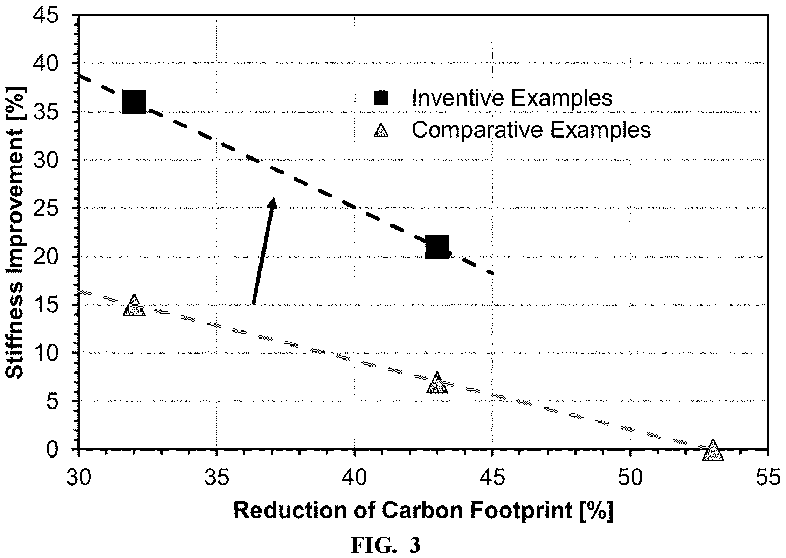

Figure 3 is a diagram showing the values for the reduction of carbon footprint in relation to the values for the stiffness improvement for comparative examples CE-7 to CE-10 and of examples IE-1 and IE-2. From this diagram, it can be determined that by using the polypropylene polymer composition in accordance with embodiments of the present disclosure P-4 in polymer blends in accordance with embodiments of the present disclosure improved stiffness values were achieved compared to polymer blends comprising the same amount of recycled polymer compositions, but which comprised a comparative polypropylene polymer composition CP-1 or CP-2. Examples IE-1 and IE-2 in accordance with embodiments of the present disclosure achieved improved stiffness values at comparable values for carbon footprint reduction. Therefore, the polymer blends of embodiments of the present disclosure were highly sustainable and offered an improved stiffness compared to other polymer blends comprising recycled polymer compositions.

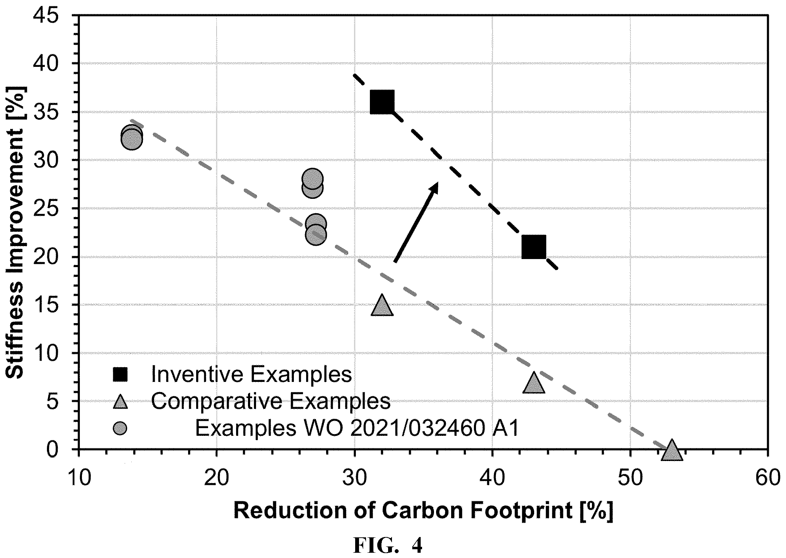

This can additionally be derived from the data of Figure 4, which is identical to Figure 3, but further shows values of comparative examples according to the disclosure of WO 2021/032460 A1 (stiffness improvement (tensile modulus) relative to CE2 of WO 2021/032460 A1; calculation of the reduction of carbon footprint as described herein). The examples of WO 2021/032460 A1 represent state of the art polymer blends based on recycled polymer compositions. As can be seen from the plotted extrapolation lines in the diagram of Figure 4, the examples in accordance with embodiments of the present disclosure offered improved stiffness values at a comparable reduction of carbon footprint value. Therefore, the examples in accordance with embodiments of the present disclosure were an improvement over the prior art WO 2021/032460 A1.

Finally, comparative examples CE-11 and CE-12 and examples IE-3 and IE-4 were prepared according to the method "Injection Molding Trials" described above. The properties of CE-5, CE-11, CE-12, IE-3 and IE-4 are shown in Table 4 below.

**Table 4. Comparative examples and examples from Injection Molding Trials.**

| Example | CE-5 | CE-11 | CE-12 | IE-3 | IE-4 |
|---|---|---|---|---|---|
| Composition | 100% PCR-1 | 80% PCR-1 +20%CP-1 | 80% PCR-1 +20%CP-3 | **80% PCR-1 +20%P-4** | **80% PCR-1 +20% P-5** |
| MFR (2.16kg, 230°C) [g/10 min] (ISO 1133) | 21.3 | 12.4 | 37.7 | **9.2** | **36.3** |
| PI [-] | 3.1 | 3.6 | 2.9 | **3.9** | **2.9** |
| $T_M$ [°C] (ISO 11357-3) | 161.7 | 162.6 | 162.1 | **163.8** | **162.2** |
| $T_C$ [°C] (ISO 11357-3) | 124.4 | 124.0 | 124.4 | **128.8** | **124.6** |
| Flexural Modulus [MPa] (ISO 178) | 1088 | 1123 | 1093 | **1250** | **1167** |
| Stiffness Improvement [%] | 0 (Ref.) | 3 | 0 | **15** | **7** |
| Charpy (Notched) 23°C [kJ/m$^2$] (ISO 179-1) | 5.6 | 5.7 | 5.1 | **5.7** | **4.9** |
| Weight Fraction of Virgin Polymer Composition [wt%] | 0 | 20 | 20 | **20** | **20** |
| Reduction of the Use of Natural Resources [%] | 100 | 80 | 80 | **80** | **80** |
| Carbon Footprint [kg $CO_2$-eq./ kg Material] | 0.8 | 0.98 | 0.98 | **0.98** | **0.98** |
| Reduction of Carbon Footprint [%] | 53 | 43 | 43 | **43** | **43** |

As can be seen from Table 4, the polymer blends in accordance with embodiment of the present disclosure comprising a polypropylene polymer composition according to embodiments of the present disclosure (P-4 or P-5) in addition to the recycled polymer composition (PCR-1) offered improved stiffness over comparative examples CE-5, CE-11 and CE-12. Consequently, it was demonstrated that the compositions according to embodiments of the present disclosure can be used to provide improved polymer blends according to embodiments the present disclosure having excellent material properties, a low manufacturing complexity and a reduced carbon footprint.

**Claims**

1. A composition comprising:

   one or more polypropylene-based polymers; and
   one or more additives selected from the group comprising antioxidants, acid scavengers, antistatic agents, nucleating agents, clarifiers, slip agents, and antiblocking agents,
   wherein the composition satisfies I >4.0,
   wherein I is defined by the following equation (1):

$$I = \frac{T_3 + T_c - 225°C}{PI\ ratio \times \frac{XS}{wt\%} \times °C} \qquad (1)$$

   wherein

   $T_3$ is the peak maximum temperature in °C as determined by analytical temperature rising elution fractionation method;
   $T_c$ is the peak crystallization temperature in °C as determined in accordance with ISO 11357-3;

XS is the xylene cold soluble content of the composition in wt% as determined in accordance with ISO 16152 with the temperature profile described in paragraph [0019]; and

the PI ratio is defined by the following equation (2):

$$PI\ ratio = \frac{PI}{-0.679 \times \log\left(\frac{MFR}{g/10min}\right) + 3.9} \qquad (2)$$

wherein

PI is the rheological polydispersity index as determined by rheological oscillatory frequency sweep; and MFR is the melt mass-flow rate in g/10min as determined in accordance with ISO 1133 at 230°C and a load of 2.16 kg.

2. The composition of claim 1, wherein $T_3$ is of from 115.5°C to 140.0°C.

3. The composition of claim 1 or claim 2, wherein $T_3$ is of from 115.5°C to 140.0°C.

4. The composition of claim 1 or claim 3, wherein $T_c$ is of from 115.0°C to 145.0°C.

5. The composition of any one of claims 1 to 4, wherein XS is ≤5.5wt%.

6. The composition of any one of claims 1 to 5, wherein the PI ratio is of from 0.90 to 1.23.

7. The composition of any one of claims 1 to 5, wherein the MFR is of from 0.1 to 200g/10min.

8. The composition of any one of claims 1 to 7, wherein I is >9.0.

9. The composition of any one of claims 1 to 8, wherein at least one of the following conditions is met: $T_3$ is of from 117.3°C to 120.0°C, $T_c$ is of from 129.0°C to 135.0°C, XS is ≤2.4wt%, PI ratio is of from 0.95 to 1.13, MFR is of from 0.8 to 140g/10min, and/or I is ≥9.6.

10. A polymer blend comprising:

the composition of any one of claims 1 to 9; and
at least one recycled polymer.

11. The polymer blend of claim 10, wherein the composition is present in an amount of from 5wt% to 50wt% of the total weight of the polymer blend.

12. The polymer blend of claim 10 or claim 11, wherein the at least one recycled polymer is present in an amount of from 50wt% to 95wt% of the total weight of the polymer blend.

13. The polymer blend of any one of claims 10 to 12, wherein the at least one recycled polymer comprises a polypropylene homopolymer and/or copolymer content of >50wt%.

14. A method of preparing the polymer blend of any one of claims 10 to 13 comprising mixing the composition and the at least one recycled polymer.

15. Use of a composition of any one of claims 1 to 9 in a polymer blend for upgrading one or more post-consumer waste polymers or industrial waste polymers.

16. The use of claim 15, wherein the polymer blend is according to any one of claims 10 to 13.

17. An article comprising the composition of any one of claims 1 to 9 or the polymer blend of any one of claims 10 to 13.

**FIG. 1**

EP 4 389 810 A1

**FIG. 2**

EP 4 389 810 A1

FIG. 3

FIG. 4

**Europäisches Patentamt**
**European Patent Office**
**Office européen des brevets**

# EUROPEAN SEARCH REPORT

Application Number

EP 22 21 6447

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 726 603 A1 (BOREALIS TECH OY [FI]) 29 November 2006 (2006-11-29) | 1-5,7,9, 17 | INV. C08K5/00 C08L23/12 C08F110/06 |
| Y | * page 10 - page 12; example 1; tables 1-3 * <br> * paragraphs [0028], [0051], [0055] * | 1-17 | |
| X,D | US 10 066 034 B2 (LUMMUS NOVOLEN TECHNOLOGY GMBH [DE]) 4 September 2018 (2018-09-04) | 1,5,7,9 | |
| Y | * claim 1 * <br> * examples * <br> * column 15, line 49 - line 51 * | 1-17 | |
| Y,D | WO 2022/084236 A1 (BOREALIS AG [AT]) 28 April 2022 (2022-04-28) <br> * claims 1,2,15 * <br> * page 1, line 1 - line 32 * <br> * page 3, line 4 - line 6 * | 1-17 | |

**TECHNICAL FIELDS SEARCHED (IPC)**

C08K
C08L
C08F

The present search report has been drawn up for all claims

| Place of search | Date of completion of the search | Examiner |
|---|---|---|
| Munich | 11 May 2023 | Lippert, Sigrid |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 4 389 810 A1

### ANNEX TO THE EUROPEAN SEARCH REPORT
### ON EUROPEAN PATENT APPLICATION NO.

EP 22 21 6447

11-05-2023

| Patent document cited in search report | Publication date | Patent family member(s) | Publication date |
|---|---|---|---|
| EP 1726603 A1 | 29-11-2006 | CN 101180326 A | 14-05-2008 |
| | | EA 200702342 A1 | 30-06-2008 |
| | | EP 1726603 A1 | 29-11-2006 |
| | | EP 1883660 A1 | 06-02-2008 |
| | | WO 2006125673 A1 | 30-11-2006 |
| US 10066034 B2 | 04-09-2018 | BR 112015012078 A2 | 11-07-2017 |
| | | CN 104981486 A | 14-10-2015 |
| | | EP 2935350 A1 | 28-10-2015 |
| | | EP 3904399 A1 | 03-11-2021 |
| | | JP 6127149 B2 | 10-05-2017 |
| | | JP 2015535540 A | 14-12-2015 |
| | | KR 20150091326 A | 10-08-2015 |
| | | MX 363582 B | 27-03-2019 |
| | | SG 10201704438X A | 29-06-2017 |
| | | SG 11201504141V A | 30-07-2015 |
| | | TW 201420621 A | 01-06-2014 |
| | | US 2014148566 A1 | 29-05-2014 |
| | | US 2017022304 A1 | 26-01-2017 |
| | | WO 2014079969 A1 | 30-05-2014 |
| | | ZA 201503545 B | 26-10-2016 |
| WO 2022084236 A1 | 28-04-2022 | NONE | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022084236 A1
- WO 2014167493 A1
- EP 3715410 A1
- WO 2022104275 A1
- EP 3916047 A1
- WO 2021032460 A1
- WO 2021165751 A1
- US 20220145057 A1
- WO 2022123000 A1
- WO 2022123002 A1
- EP 3802689 B1
- US 10066034 B2

**Non-patent literature cited in the description**

- **PASQUINI, N.** Polypropylene Handbook. 2005
- **PAULIK et al.** *Macromol. Chem. Phys.,* 2021, vol. 222, 2100302
- **ALSABRI et al.** *Polymers,* 2021, vol. 13, 3793
- **HAALAND et al.** *Anal. Chem.,* 1988, vol. 60, 1193-1202